# EUROPEAN PATENT SPECIFICATION

(11) **EP 4 527 708 B1**
(45) Date of publication and mention of the grant of the patent: **25.03.2026**
(21) Application number: 23206591.2
(22) Date of filing: 30.10.2023
(51) Int. Cl.: B60W 60/00, G06N 3/08

(54) **METHOD FOR OBTAINING VEHICLE TRAJECTORY, CONTROL APPARATUS, READABLE STORAGE MEDIUM, AND VEHICLE**
VERFAHREN ZUM ERHALTEN EINER FAHRZEUGTRAJEKTORIE, STEUERUNGSVORRICHTUNG, LESBARES SPEICHERMEDIUM UND FAHRZEUG
PROCÉDÉ D'OBTENTION DE TRAJECTOIRE DE VÉHICULE, APPAREIL DE COMMANDE, SUPPORT D'INFORMATIONS LISIBLE ET VÉHICULE

(30) Priority: 20.09.2023 CN 202311221693
(43) Date of publication of application: 26.03.2025
(73) Proprietor: Anhui NIO Autonomous Driving Technology Co., Ltd., Hefei, Anhui 230601 (CN)
(72) Inventor: FAN, Haoyang, Hefei; Anhui Province, 230601 (CN); QIN, Hailong, Hefei, Anhui Province, 260301 (CN); REN, Shaoqing, Hefei, Anhui Province, 230601 (CN); MA, Jingyuan, Hefei, Anhui Province, 230601 (CN); SUN, Gang, Hefei, Anhui Province, 230601 (CN); ZHENG, Shaohua, Hefei, Anhui Province, 230601 (CN); LI, Qiuyi, Hefei, Anhui Province, 230601 (CN); FU, Xiaoxin, Hefei, Anhui Province, 230601 (CN)
(74) Representative: Vossius & Partner Patentanwälte Rechtsanwälte mbB

(56) References cited:
- WO-A1-2022/033810
- WO-A1-2022/214414
- US-A1- 2017 158 193
- US-A1- 2019 217 857
- US-A1- 2021 370 980
- US-A1- 2022 017 122

## Description

### Technical Field

The invention relates to the technical field of autonomous driving, and specifically provides a method for predicting a vehicle trajectory, a control apparatus, a readable storage medium, and a vehicle.

### Background Art

In an autonomous driving system, a planning and control function can receive surrounding environment information input from a perception layer to form a motion trajectory and a control input required for an actuator.

With the exponential expansion of driving scenarios, autonomous driving functions need to have the ability to conduct complex interactions with obstacle scenarios. However, a conventional rule-based planning and control (PNC) algorithm faces difficulties in iteration when new scenario interactions emerge in large numbers.

Accordingly, there is a need for a new vehicle control solution in the art to solve the above problem.

US 2022/017122 A1 relates to a system and a method for providing social-stage spatio-temporal multi-modal future forecasting that include receiving environment data associated with a surrounding environment of an ego vehicle and implementing graph convolutions to obtain attention weights that are respectively associated with agents that are located within the surrounding environment. The system and method also include decoding multi modal trajectories and probabilities for each of the agents. The system and method further include controlling at least one vehicle system of the ego vehicle based on predicted trajectories associated with each of the agents and the rankings associated with probabilities that are associated with each of the predicted trajectories.

US 2021/370980 A1 relates to an autonomous vehicle (AV) planning method which comprises: receiving sensor inputs pertaining to an AV; processing the AV sensor inputs to determine an encountered driving scenario; in an AV planner, executing a tree search algorithm to determine a sequence of AV manoeuvres corresponding to a path through a constructed game tree; and generating AV control signals for executing the determined sequence of AV manoeuvres; wherein the game tree has a plurality of nodes representing anticipated states of the encountered driving scenario, and the anticipated driving scenario state of each child node is determined by updating the driving scenario state of its parent node based on (i) a candidate AV manoeuvre and (ii) an anticipated behaviour of at least one external agent in the encountered driving scenario.

US 2019/217857 A1 relates to a motion planner of an autonomous vehicle's computer system which uses reconfigurable collision detection architecture hardware to perform a collision assessment on a planning graph for the vehicle prior to execution of a motion plan. For edges on the planning graph, which represent transitions in states of the vehicle, the system sets a probability of collision with a dynamic object in the environment based at least in part on the collision assessment. Depending on whether the goal of the vehicle is to avoid or collide with a particular dynamic object in the environment, the system then performs an optimization to identify a path in the resulting planning graph with either a relatively high or relatively low potential of a collision with the particular dynamic object. The system then causes the actuator system of the vehicle to implement a motion plan with the applicable identified path based at least in part on the optimization.

US 2017/158193 A1 relates to a method for the automated driving of a motor vehicle which provides environment data, detects objects in the environment data, selects a current scenario by a scenario-interpretation apparatus on the basis of the detected objects, wherein a scenario has at least one elementary situation which is assigned at least one monitoring region and an enable criterion as attributes, and in addition successively for each of the elementary situations of the current scenario, estimates a destination point, plans a trajectory to the destination point by a maneuver-planning apparatus, interrogates information about a monitoring region from the environment-perception apparatus by the scenario-interpretation apparatus, checks for the presence of the at least one enable criterion by the scenario-interpretation apparatus, and if the at least one enable criterion is satisfied, automated driving along the trajectory as far as the destination point by a controller.

### Summary

The invention is defined in the appended claims. Aspects, embodiments and examples disclosed herein which do not fall within the scope of the appended claims do not form part of the invention and are merely provided for illustrative purposes.

In order to overcome the above defect, the invention is proposed to solve or at least partially solve the problem of how to effectively deal with existing highly complex traffic scenario interactions and difficulties in iteration of a planning and control process.

According to a first aspect, the invention provides a method for predicting a vehicle trajectory. The method includes:
obtaining, based on a static environment perception result and a traffic agent perception result of the vehicle at a current moment, a plurality of scenario interaction results of each traffic agent in an environment of the vehicle at the current moment, where the scenario interaction results indicate different interaction intentions of the traffic agents;
obtaining an initial interaction scenario based on scenario interaction results of all traffic agents, where the interaction scenario is a distribution of interaction intentions of different traffic agents at a corresponding moment;
performing interaction scenario simulation based on the initial interaction scenario and an ego vehicle driving decision of the vehicle to obtain an optimal interaction scenario evolution feature; and
obtaining an optimal driving trajectory of the vehicle based on the optimal interaction scenario evolution feature and a state of the vehicle.

The performing interaction scenario simulation based on the initial interaction scenario and an ego vehicle driving decision of the vehicle to obtain an optimal interaction scenario evolution feature includes:
obtaining interaction scenarios at a plurality of consecutive moments in the future based on the initial interaction scenario and the ego vehicle driving decision of the vehicle; and
obtaining the optimal interaction scenario evolution feature based on a plurality of the interaction scenarios.

In a technical solution of the foregoing method for predicting a vehicle trajectory, the obtaining interaction scenarios at a plurality of consecutive moments in the future based on the initial interaction scenario and the ego vehicle driving decision of the vehicle includes:
obtaining, for each moment, a plurality of interaction scenarios at the current moment based on interaction scenarios at the previous moment and the ego vehicle driving decision of the vehicle; and
obtaining, based on scenario values of the interaction scenarios, an interaction scenario having the highest scenario value at the current moment as a final interaction scenario at the current moment, thereby obtaining the interaction scenarios at the plurality of consecutive moments in the future.

In a technical solution of the foregoing method for predicting a vehicle trajectory, the method further includes determining the scenario values of the interaction scenarios according to the following step:
obtaining the values of the interaction scenarios through a trained preset learned interaction value network,
where the trained learned interaction value network is obtained by training based on annotated human driving behavior data, and the trained learned interaction value network assigns a higher scenario value to an interaction scenario that conforms to human driving behavior.

In a technical solution of the foregoing method for predicting a vehicle trajectory, the obtaining the optimal interaction scenario evolution feature based on a plurality of the interaction scenarios includes:
obtaining, based on a plurality of the interaction scenarios, a semantic decision space and a feasible convex driving corridor of each interaction scenario, where the semantic decision space includes interaction intentions of traffic agents in an interaction scenario having the highest scenario value, and the feasible convex driving corridor is time and space constraints on the interaction intentions; and
using the semantic decision space and the feasible convex driving corridor as the optimal interaction scenario evolution feature.

In a technical solution of the foregoing method for predicting a vehicle trajectory, the obtaining an optimal driving trajectory of the vehicle based on the optimal interaction scenario evolution feature and a state of the vehicle includes:
performing, based on the optimal interaction scenario evolution feature, corresponding interaction intention encoding on each interaction intention included in the semantic decision space, and obtaining a reward function corresponding to the interaction intention;
obtaining a total interaction reward function based on a plurality of interaction intentions and a reward function for each interaction intention; and
obtaining the optimal driving trajectory of the vehicle from the feasible convex driving corridor based on the total interaction reward function and the state of the vehicle.

In a technical solution of the foregoing method for predicting a vehicle trajectory, the performing, based on the optimal interaction scenario evolution feature, corresponding interaction intention encoding on each interaction intention included in the semantic decision space includes:
performing spatio-temporal joint feature embedding based on the optimal interaction scenario evolution feature, to obtain a spatio-temporal joint feature embedding result, where the spatio-temporal joint feature embedding refers to feature embedding encoding, in the feasible convex driving corridor, of temporal features and spatial features of the traffic agents in the semantic decision space; and
performing corresponding interaction intention encoding on each interaction intention based on the spatio-temporal joint feature embedding result, to obtain an interaction encoding result.

In a technical solution of the foregoing method for predicting a vehicle trajectory, the obtaining a reward function corresponding to the interaction intention includes:
training, based on human driving behavior data, the reward function in the feasible convex driving corridor to minimize a difference between an ego vehicle driving decision corresponding to the reward function and the human driving behavior data, thereby obtaining the reward function corresponding to the interaction intention.

In a technical solution of the foregoing method for predicting a vehicle trajectory, the obtaining, based on a static environment perception result and a traffic agent perception result of the vehicle at a current moment, a plurality of scenario interaction results of each traffic agent in an environment of the vehicle at the current moment includes:
performing attention interaction encoding based on the static environment perception result and the traffic agent perception result to obtain an interaction encoding feature;
performing attention decoding on the interaction encoding feature to obtain an attention decoding result; and
obtaining the plurality of scenario interaction results based on the attention decoding result.

In a technical solution of the foregoing method for predicting a vehicle trajectory, the performing attention interaction encoding based on the static environment perception result and the traffic agent perception result to obtain an interaction encoding feature includes:
performing attention interaction for the traffic agent perception results of different traffic agents to obtain a traffic agent interaction feature;
fusing the traffic agent interaction feature and a temporal feature to obtain a traffic agent fusion feature; and
performing attention interaction for the traffic agent fusion feature and the static environment perception result to obtain the interaction encoding feature.

According to a second aspect, a control apparatus is provided. The control apparatus includes at least one processor and at least one storage apparatus adapted to store a plurality of program codes, where the program codes are adapted to be loaded and executed by the processor to perform the method for predicting a vehicle trajectory according to any one of the technical solutions of the foregoing method for predicting a vehicle trajectory.

According to a third aspect, a computer-readable storage medium is provided. The computer-readable storage medium has a plurality of program codes stored therein, where the program codes are adapted to be loaded and executed by a processor to perform the method for predicting a vehicle trajectory according to any one of the technical solutions of the foregoing method for predicting a vehicle trajectory.

According to a fourth aspect, a vehicle is provided. The vehicle includes the control apparatus in the technical solution of the foregoing control apparatus.

The above one or more technical solutions of the invention have at least one or more of the following beneficial effects:
In the technical solutions for implementing the invention, according to the invention, scenario interaction results of each traffic agent in an environment of a vehicle at a current moment are obtained based on a static environment perception result and a traffic agent perception result of the vehicle at the current moment, an initial interaction scenario is obtained based on the scenario interaction results, interaction scenario simulation is performed based on the initial interaction scenario and an ego vehicle driving decision to determine an optimal interaction scenario evolution feature of the traffic agent, and an optimal driving trajectory of the vehicle is obtained based on the optimal interaction scenario evolution feature and a state of the vehicle. Through the above configuration, the invention allows for obtaining multimodal scenario interaction results of each traffic agent by comprehensively considering the static environment perception result and the traffic agent perception result, so that the scenario interaction results can comprehensively consider dynamic features and static features in the environment of the vehicle; the scenario interaction simulation is performed based on the initial interaction scenario and the ego vehicle driving decision, and an optimal interaction scenario evolution process can be selected from numerous interaction scenarios by comprehensively considering impact of the ego vehicle driving decision on the environment of the vehicle, thereby obtaining the optimal interaction scenario evolution feature; and then a search for the optimal driving trajectory is performed based on the optimal interaction scenario evolution feature and the state of the vehicle, so that a more accurate optimal driving trajectory can be obtained. The invention allows for effectively reducing dimensionality of a highly complex interaction scenario and finding an optimal driving trajectory, effectively solving the problem of difficulties in iteration of a planning and control algorithm and enabling a user to obtain a safer and more comfortable driving experience.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In the drawings:
FIG. 1 is a schematic flowchart of main steps of a method for predicting a vehicle trajectory according to an embodiment of the disclosure;
FIG. 2 is a schematic diagram of main components of a multimodality attention network according to an implemented embodiment of the disclosure;
FIG. 3 is a schematic diagram of an interaction scenario composition according to an implementation of an embodiment of the disclosure;
FIG. 4 is a schematic diagram of main processes of performing interaction scenario simulation using an interactive learned interaction value network and a simulation tree according to an implementation of an embodiment of the disclosure; and
FIG. 5 is a schematic flowchart of main processes of obtaining an optimal driving trajectory according to an implementation of an embodiment of the disclosure.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

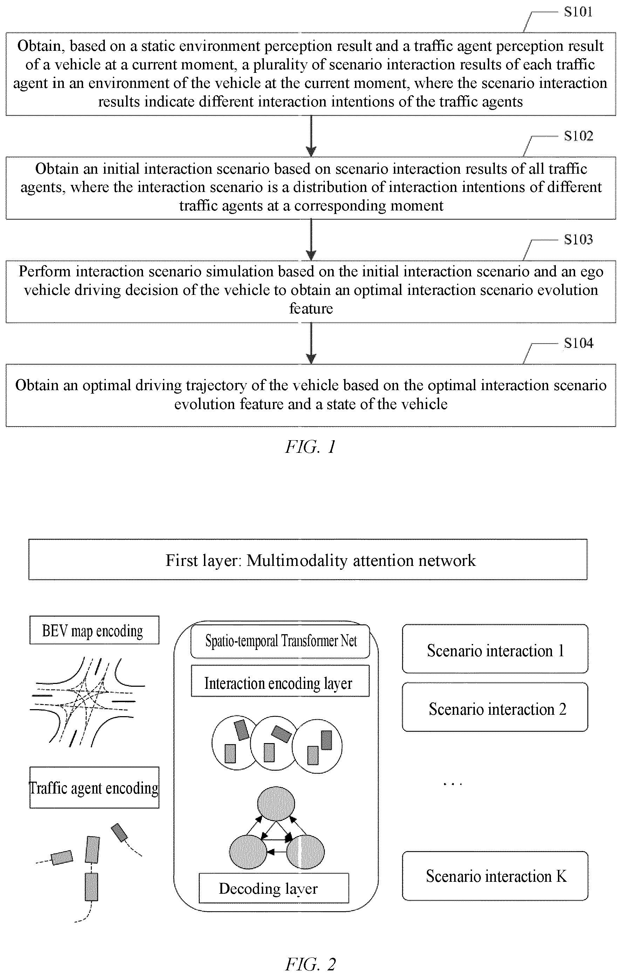

Referring to FIG. 1, FIG. 1 is a schematic flowchart of main steps of a method for predicting a vehicle trajectory according to an embodiment of the disclosure. As shown in FIG. 1, the method for predicting a vehicle trajectory in this embodiment of the disclosure mainly includes the following steps S101 to S 104.

Step S101: Obtain, based on a static environment perception result and a traffic agent perception result of a vehicle at a current moment, a plurality of scenario interaction results of each traffic agent in an environment of the vehicle at the current moment, where the scenario interaction results indicate different interaction intentions of the traffic agents;

In this embodiment, the plurality of scenario interaction results of the traffic agent may be obtained based on the static environment perception result and the traffic agent perception result of the vehicle at the current moment.

In an implementation, the static environment perception result and the traffic agent perception result may be obtained based on a perception algorithm. The static environment perception result may be bird's eye view (BEV) map encoding, such as a detection result of lane lines, curbs, etc. The traffic agent perception result may be an encoding result of a static obstacle and a dynamic obstacle that is output using the perception algorithm.

In an implementation, the scenario interaction result may be different interaction intentions of each traffic agent, and then constitute multimodal interactions of the traffic agent. For example, in a current environment, a traffic agent (Agent) may execute interaction intentions such as going straight, turning left, and cutting in. These interaction intentions may constitute a scenario interaction result of the traffic agent.

In an implementation, reference may be made to FIG. 2. FIG. 2 is a schematic diagram of main components of a multimodality attention network according to an implemented embodiment of the disclosure. As shown in FIG. 2, based on a transformer network (Net), encoding can be performed by an interaction encoding layer based on BEV encoding (the static environment perception result) and traffic agent encoding (the traffic agent perception result), and decoding is performed by a decoding layer based on an encoding result, to obtain a plurality of scenario interaction results (a scenario interaction 1, a scenario interaction 2, ..., a scenario interaction k). The transformer network is a neural network architecture based on a self-attention mechanism, and includes an encoder and a decoder, each of them composed of a plurality of layers of stacked self-attention and feedforward neural networks.

Step S102: Obtain an initial interaction scenario based on scenario interaction results of all traffic agents, where the interaction scenario is a distribution of interaction intentions of different traffic agents at a corresponding moment.

In this embodiment, a distribution of interaction intentions, i.e., the interaction scenario, of each traffic agent at the current moment may be obtained based on the scenario interaction results of all the traffic agents. In other words, the interaction scenario is a collection that combines the scenario interaction results of all the traffic agents in the current environment. For example, the interaction scenario consists of a scenario interaction result 1, a scenario interaction result 3, and a scenario interaction result 4. The scenario interaction result 1 is that an agent 1 bypasses an agent 3. The scenario interaction result 3 is that an agent 2 bypasses an agent 4. The scenario interaction result 4 is that an oncoming vehicle of the agent 3 bypasses an agent 7. Then the interaction scenario is as follows: The agent 1 bypasses the agent 3, the agent 2 bypasses the agent 4, and the oncoming vehicle of the agent 3 bypasses the agent 7. An agent is a traffic agent.

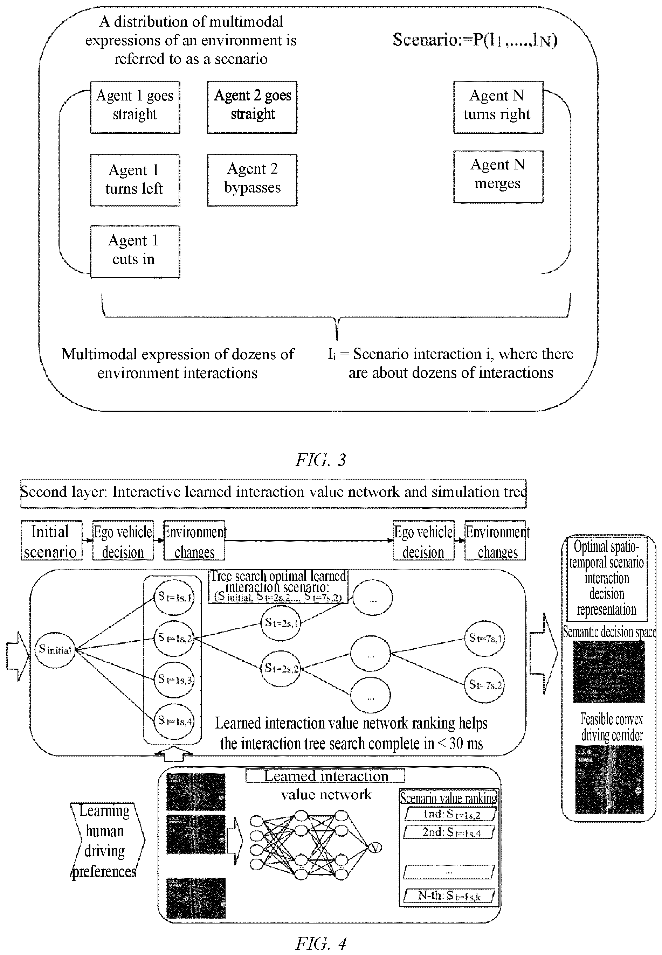

In an implementation, reference may be made to FIG. 3. FIG. 3 is a schematic diagram of an interaction scenario composition according to an implementation of an embodiment of the disclosure. As shown in FIG. 3, a distribution of multimodal expressions of an environment is referred to as a scenario (i.e., an interaction scenario); Scenario io (interaction scenario) = P(I₁, ..., I_{N}), where Ii = scenario interaction result i, and there are about dozens of scenario interaction results; and the interaction scenario is a multimodal expression of a distribution of interaction intentions of a plurality of traffic agents in the environment.

Step S103: Perform interaction scenario simulation based on the initial interaction scenario and an ego vehicle driving decision of the vehicle to obtain an optimal interaction scenario evolution feature.

In this embodiment, the interaction scenario may be deduced based on the initial interaction scenario and the ego vehicle driving decision, so as to obtain the optimal interaction scenario evolution feature. To be specific, after the initial interaction scenario is determined, the ego vehicle driving decision may cause changes in the environment, and the changes in the environment may further lead to a plurality of interaction scenarios at a next moment, which continuously extends the interaction scenario, thereby achieving the interaction scenario simulation; and an optimal simulation path is selected from an interaction scenario simulation result to obtain the optimal interaction scenario evolution feature. The optimal interaction scenario evolution feature represents a combination of optimal interaction scenarios at a plurality of consecutive moments.

In an implementation, the interaction scenario simulation may be performed in the form of a search tree.

In an implementation, the optimal simulation path may be obtained through a beam search algorithm.

In an implementation, the optimal simulation path may be obtained through a greedy search algorithm.

Step S104: Obtain an optimal driving trajectory of the vehicle based on the optimal interaction scenario evolution feature and a state of the vehicle.

In this embodiment, the optimal driving trajectory of the vehicle may be obtained based on the optimal interaction scenario evolution feature and the state of the vehicle. To be specific, in the combination of optimal interaction scenarios at the plurality of consecutive moments, a search for the optimal driving trajectory is performed based on the state of the vehicle.

Based on the above steps S101 to S104, according to this embodiment of the disclosure, scenario interaction results of each traffic agent in an environment of a vehicle at a current moment are obtained based on a static environment perception result and a traffic agent perception result of the vehicle at the current moment, an initial interaction scenario is obtained based on the scenario interaction results, interaction scenario simulation is performed based on the initial interaction scenario and an ego vehicle driving decision to determine an optimal interaction scenario evolution feature of the traffic agent, and an optimal driving trajectory of the vehicle is obtained based on the optimal interaction scenario evolution feature and a state of the vehicle. Through the above configuration, this embodiment of the disclosure allows for obtaining multimodal scenario interaction results of each traffic agent by comprehensively considering the static environment perception result and the traffic agent perception result, so that the scenario interaction results can comprehensively consider dynamic features and static features in the environment of the vehicle; the scenario interaction simulation is performed based on the initial interaction scenario and the ego vehicle driving decision, and an optimal interaction scenario evolution process can be selected from numerous interaction scenarios by comprehensively considering impact of the ego vehicle driving decision on the environment of the vehicle, thereby obtaining the optimal interaction scenario evolution feature; and then a search for the optimal driving trajectory is performed based on the optimal interaction scenario evolution feature and the state of the vehicle, so that a more accurate optimal driving trajectory can be obtained. This embodiment of the disclosure allows for effectively reducing dimensionality of a highly complex interaction scenario and finding an optimal driving trajectory, effectively solving the problem of difficulties in iteration of a planning and control algorithm and enabling a user to obtain a safer and more comfortable driving experience.

Step S101, step S102, and step S104 each are further described below.

In an implementation of this embodiment of the disclosure, step S 101 may further include step S1011 to step S1013 as follows.

Step S1011: Perform attention interaction encoding based on the static environment perception result and the traffic agent perception result to obtain an interaction encoding feature.

In an implementation, step S1011 may further include step S10111 to step S10113 as follows.

Step S10111: Perform attention interaction for the traffic agent perception results of different traffic agents to obtain a traffic agent interaction feature.

Step S10112: Fuse the traffic agent interaction feature and a temporal feature to obtain a traffic agent fusion feature.

Step S10113: Perform attention interaction for the traffic agent fusion feature and the static environment perception result to obtain the interaction encoding feature.

In this implementation, interaction encoding (attention interaction) may be performed on traffic agent encoding (traffic agent perception results) of different traffic agents to obtain a traffic agent interaction feature. For example, feature dimensions of an encoding feature (Agent Feature) of the traffic agent encoding are A*T*C, feature dimensions of the traffic agent interaction feature are A*T*C, and the traffic agent performs temporal feature fusion to obtain a traffic agent fusion feature having feature dimensions A*C. Feature dimensions of static environment encoding (the static environment perception result) are L*C. Interaction encoding (attention interaction) is performed on the static environment encoding and the traffic agent fusion feature to obtain an interaction encoding feature having feature dimensions A*C.

Step S1012: Perform attention decoding on the interaction encoding feature to obtain an attention decoding result.

In this implementation, the attention decoding may be performed on the interaction encoding feature to obtain the attention decoding result. The attention decoding result includes an interaction encoding feature corresponding to a multimodal prediction and a scenario interaction result of the traffic agent.

Step S1013: Obtain the plurality of scenario interaction results based on the attention decoding result.

In this implementation, the plurality of scenario interaction results may be obtained based on the attention decoding result. To be specific, an interaction process between the environment of the vehicle and environment agents is abstracted into an attention network (Attention Net), and an exponential scenario complexity is reduced to the most likely scenario interaction results (for example, dozens of most likely scenario interaction results) for subsequent simulation calculations.

In an implementation, real interactive driving data can be used to train a spatio-temporal transformer net, so that the spatio-temporal transformer net obtains more accurate scenario interaction results. For example, the real interactive driving data can be annotated with interactive attention, and the spatio-temporal transformer net is trained using supervised learning.

In an implementation of this embodiment of the disclosure, step S103 may further include step S1031 and step S1032 as follows.

Step S1031: Obtain interaction scenarios at a plurality of consecutive moments in the future based on the initial interaction scenario and the ego vehicle driving decision of the vehicle.

In this implementation, step S1031 may include step S10311 and step S10312 as follows.

Step S10311: Obtain, for each moment, a plurality of interaction scenarios at the current moment based on interaction scenarios at a previous moment and the ego vehicle driving decision of the vehicle.

Step S10312: Obtain, based on scenario values of the interaction scenarios, an interaction scenario having the highest scenario value at the current moment as a final interaction scenario at the current moment, thereby obtaining the interaction scenarios at the plurality of consecutive moments in the future.

In this implementation, reference may be made to FIG. 4. FIG. 4 is a schematic diagram of main processes of performing interaction scenario simulation using an interactive learned interaction value network and a simulation tree according to an implementation of an embodiment of the disclosure. As shown in FIG. 4, interaction processes of all environment agents in the environment can be jointly considered. In a search tree of FIG. 4, the environment may change based on the initial scenario (the initial interaction scenario) and the ego vehicle decision (the ego vehicle driving decision), so that a plurality of interaction scenarios are obtained at a next moment. Over time, a new ego vehicle driving decision will be deduced at a new moment, thus producing more interaction scenarios. There is an interaction scenario having the highest scenario value among the interaction scenarios at each moment, so that the interaction scenario having the highest scenario value at each moment can be selected as a final interaction scenario at the current moment. That is, a tree search optimal learned interaction scenario in FIG. 4 is (Sᵢₙᵢₜᵢₐₗ, S_{t=1s,2}, ..., S_{t=7s,2}).

In an implementation, the scenario values of the interaction scenarios can be determined through a trained preset learned interaction value network. The trained learned interaction value network may obtained by training based on annotated human driving behavior data, and the trained learned interaction value network assigns a higher scenario value to an interaction scenario that conforms to human driving behavior. As shown in FIG. 4, the learned interaction value network can be used to learn human driving preferences, thereby obtaining a ranking of the scenario values of the interaction scenarios. For example, a result of ranking the scenario values of the interaction scenarios at t = 1s is 1nd:S_{t=1s,2}; 2nd:S_{t=1s,4}; ...; N-th:St=1s,k. Game value network ranking can help simplify a search process of the interaction tree, greatly reducing a search time, such as completing it in < 30 ms.

Step S1032: Obtain the optimal interaction scenario evolution feature based on a plurality of the interaction scenarios.

In this implementation, step S1032 may further include step S10321 and step S10322 as follows.

Step S10321: Obtain, based on a plurality of the interaction scenarios, a semantic decision space and a feasible convex driving corridor of each interaction scenario, where the semantic decision space includes interaction intentions of traffic agents in an interaction scenario having the highest scenario value, and the feasible convex driving corridor is time and space constraints on the interaction intentions.

Step S10322: Use the semantic decision space and the feasible convex driving corridor as the optimal interaction scenario evolution feature.

In this implementation, the semantic decision space and the feasible convex driving corridor of each interaction scenario may be obtained, and the semantic decision space and the feasible convex driving corridor may be used as the optimal interaction scenario evolution feature. The semantic decision space includes interaction intentions of traffic agents in an interaction scenario having the highest scenario value, and the feasible convex driving corridor is time and space constraints on the interaction intentions. The optimal interaction scenario evolution feature is an optimal spatio-temporal scenario interaction representation in FIG. 4, including the semantic decision space and the feasible convex driving corridor (the feasible convex space). Learning human driving preferences through the learned interaction value network can transform the high-dimensional search tree into a local convex space, effectively reducing an amount of data for subsequent calculations.

In an implementation, the learned interaction value network may include a reinforcement learning algorithm, and the scenario values of the interaction scenarios are obtained through the reinforcement learning algorithm.

In an implementation, step S 104 may further include step S1041 to step S1043 as follows.

Step S1041: Perform, based on the optimal interaction scenario evolution feature, corresponding interaction intention encoding on each interaction intention included in the semantic decision space, and obtain a reward function corresponding to the interaction intention.

In this implementation, step S1041 may include step S10411 and step S 10412 as follows.

Step S10411: Perform spatio-temporal joint feature embedding based on the optimal interaction scenario evolution feature, to obtain a spatio-temporal joint feature embedding result, where the spatio-temporal joint feature embedding refers to feature embedding encoding, in the feasible convex driving corridor, of temporal features and spatial features of the traffic agents in the semantic decision space.

Step S10412: Perform corresponding interaction intention encoding on each interaction intention based on the spatio-temporal joint feature embedding result, to obtain an interaction encoding result.

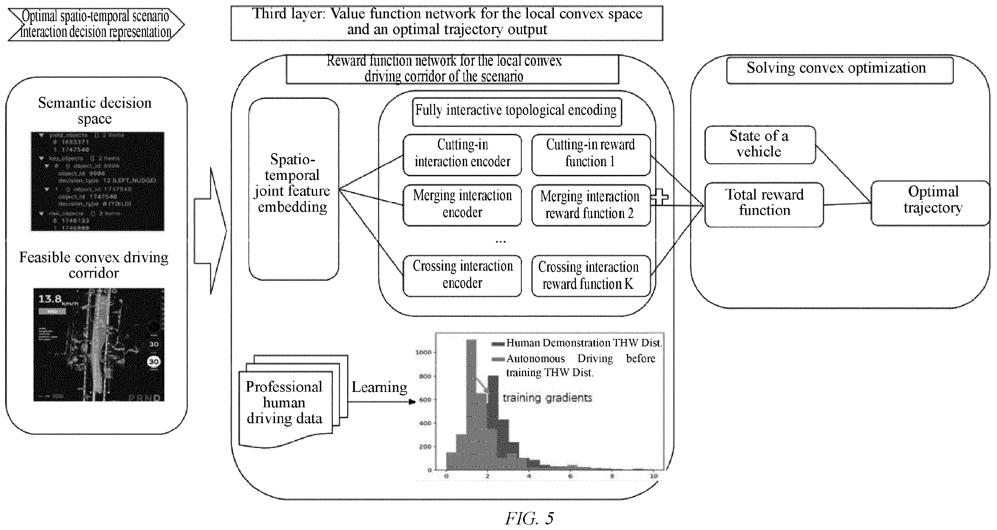

In this implementation, reference may be made to FIG. 5. FIG. 5 is a schematic flowchart of main processes of obtaining an optimal driving trajectory according to an implementation of an embodiment of the disclosure. As shown in FIG. 5, spatio-temporal joint feature embedding, i.e., spatio-temporal joint feature embedding encoding, is performed on the optimal spatio-temporal scenario interaction decision representation (the optimal interaction scenario evolution feature) obtained in step S 103 in the form of the semantic decision space and the feasible convex driving corridor. In addition, a reward function network for the local convex space of the scenario is established, and fully interactive topological encoding is performed based on the spatio-temporal joint feature embedding result, that is, the corresponding interaction intention encoding is performed for each interaction intention. For example, cutting-in interaction encoding is performed for a cutting-in interaction intention; merging interaction encoding is performed for a merging interaction intention; and crossing interaction encoding is performed for a crossing interaction intention.

In an implementation, the feature embedding encoding may be implemented through a concat function.

In an implementation, step S1041 may further include step S10413 as follows.

Step S10413: Train, based on human driving behavior data, the reward function in the feasible convex driving corridor to minimize a difference between an ego vehicle driving decision corresponding to the reward function and the human driving behavior data, thereby obtaining the reward function corresponding to the interaction intention.

In this implementation, as shown in FIG. 5, professional human driving data (human driving behavior data) can be used to learn the reward function, such that a difference between an ego vehicle driving decision corresponding to the reward function and the human driving behavior data is minimized. The difference may be obtained through training gradients during the training process. For example, a gradient descent method may be used to train the reward function. Training the reward function in the feasible convex driving corridor can effectively ensure the efficiency of training.

Step S1042: Obtain a total interaction reward function based on a plurality of interaction intentions and a reward function for each interaction intention.

In this implementation, the total interaction reward function may be obtained based on various interaction intentions and their corresponding reward functions.

In an implementation, weights of different interaction intentions may be determined based on the human driving behavior data, and the total interaction reward function may be obtained by weighting the reward functions of the different interaction intentions.

Step S1043: Obtain the optimal driving trajectory of the vehicle from the feasible convex driving corridor based on the total interaction reward function and the state of the vehicle.

In this implementation, a search for the optimal trajectory may be performed in the feasible convex driving corridor based on the total interaction reward function and the state of the vehicle to obtain the optimal driving trajectory of the vehicle. As shown in FIG. 6, to be specific, convex optimization is solved in the feasible convex driving corridor. Based on the state of the vehicle and the total reward function (the total interaction reward function), a more accurate search is performed in the feasible convex driving corridor to obtain the optimal trajectory (the optimal driving trajectory).

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the foregoing embodiment of the disclosure may also be implemented by a computer program instructing relevant hardware. The computer program may be stored in a computer-readable storage medium, and when the computer program is executed by a processor, the steps of the foregoing method embodiments may be implemented. The computer program includes computer program codes, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a control apparatus. In a control apparatus embodiment according to the disclosure, the control apparatus includes a processor and a storage apparatus. The storage apparatus may be configured to store a program for performing the method for predicting a vehicle trajectory in the foregoing method embodiment. The processor may be configured to execute a program in the storage apparatus, where the program includes, but is not limited to, the program for performing the method for predicting a vehicle trajectory in the foregoing method embodiment. For ease of description, only parts related to the embodiment of the disclosure are shown. For specific technical details that are not disclosed, refer to the method part of the embodiments of the disclosure. The control apparatus may be a control apparatus formed by various electronic devices.

The control apparatus in this embodiment of the disclosure may be a control apparatus formed by various electronic devices. In some possible implementations, the control apparatus may include a plurality of storage apparatuses and a plurality of processors. The program for performing the method for predicting a vehicle trajectory in the foregoing method embodiment may be divided into a plurality of subprograms, and each subprogram may be loaded and executed by the processor to perform different steps of the method for predicting a vehicle trajectory in the foregoing method embodiment. Specifically, each subprogram may be stored in a different storage apparatus, and each processor may be configured to execute programs in one or more storage apparatuses to jointly implement the method for predicting a vehicle trajectory in the foregoing method embodiment. In other words, each processor separately performs different steps of the method for predicting a vehicle trajectory in the foregoing method embodiment to jointly implement the method for predicting a vehicle trajectory in the foregoing method embodiment.

The plurality of processors may be processors deployed on a same device. For example, the foregoing control apparatus may be a high-performance device including a plurality of processors, and the plurality of processors may be processors configured on the high-performance device. Alternatively, the plurality of processors may be processors deployed on different devices. For example, the foregoing control apparatus may be a server cluster, and the plurality of processors may be processors on different servers in the server cluster.

Further, the disclosure further provides a computer-readable storage medium. In a computer-readable storage medium embodiment according to the disclosure, the computer-readable storage medium may be configured to store a program for performing the method for predicting a vehicle trajectory in the foregoing method embodiment, and the program may be loaded and executed by a processor to implement the foregoing method for predicting a vehicle trajectory. For ease of description, only parts related to the embodiment of the disclosure are shown. For specific technical details that are not disclosed, refer to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, the disclosure further provides a vehicle. In a vehicle embodiment according to the disclosure, the vehicle includes the control apparatus in the control apparatus embodiment.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Relevant user personal information that may be involved in various embodiments of the disclosure is personal information that is proactively provided by a processing user during the use of a product/service or produced from the use of the product/service and obtained with the user's authorization, strictly in accordance with requirements of laws and regulations, following the principles of legality, legitimacy, and necessity, and based on reasonable purposes of a business scenario.

The user personal information processed in the disclosure varies depending on the specific product/service scenario, and shall be subject to the specific scenario in which the user uses the product/service. It may involve account information, device information, driving information, vehicle information, or other related information of the user. The user's personal information and processing thereof shall be treated in the disclosure with a high degree of diligence.

The disclosure attaches great importance to the security of the user personal information, and reasonable and feasible security protection measures that comply with industry standards have been taken to protect information of the user and prevent the personal information from unauthorized access, public disclosure, use, modification, damage or loss.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes within the scope of the claims.

## Claims

1. A method for predicting an optimal driving trajectory of a vehicle, the method comprising:
obtaining, based on a static environment perception result and a traffic agent perception result of the vehicle at a current moment, a plurality of scenario interaction results of each traffic agent in an environment of the vehicle at the current moment, wherein the scenario interaction results represent different interaction intentions of the traffic agents (S101);
obtaining an initial interaction scenario based on scenario interaction results of all traffic agents, wherein the interaction scenario is a distribution of interaction intentions of different traffic agents at a corresponding moment (S102);
performing interaction scenario simulation based on the initial interaction scenario and an ego vehicle driving decision to obtain an optimal interaction scenario evolution feature (S103); and
obtaining an optimal driving trajectory of the vehicle based on the optimal interaction scenario evolution feature and a state of the vehicle (S104),
**characterised in that** the performing interaction scenario simulation based on the initial interaction scenario and an ego vehicle driving decision to obtain an optimal interaction scenario evolution feature comprises:
obtaining interaction scenarios at a plurality of consecutive moments in the future based on the initial interaction scenario and the ego vehicle driving decision (S1031); and
obtaining the optimal interaction scenario evolution feature based on a plurality of the interaction scenarios (S1032).

2. The method for predicting a vehicle trajectory according to claim 1, wherein
the obtaining interaction scenarios at a plurality of consecutive moments in the future based on the initial interaction scenario and the ego vehicle driving decision (S1031) comprises:
obtaining, for each moment, a plurality of interaction scenarios at the current moment based on interaction scenarios at the previous moment and the ego vehicle driving decision (S10311); and
obtaining, based on scenario values of the interaction scenarios, an interaction scenario having the highest scenario value at the current moment as a final interaction scenario at the current moment, thereby obtaining the interaction scenarios at the plurality of consecutive moments in the future (S10312).

3. The method for predicting a vehicle trajectory according to claim 2, wherein the method further comprises determining the scenario values of the interaction scenarios according to the following step:
obtaining the values of the interaction scenarios through a learned interaction value network,
wherein the learned interaction value network is obtained by training based on labeled human driving behavior data, and the learned interaction value network assigns a higher scenario value to an interaction scenario that conforms to human driving behavior.

4. The method for predicting a vehicle trajectory according to claim 3, wherein
the obtaining the optimal interaction scenario evolution feature based on a plurality of the interaction scenarios comprises:
obtaining, based on a plurality of the interaction scenarios, a semantic decision space and a feasible convex driving corridor of each interaction scenario, wherein the semantic decision space comprises interaction intentions of traffic agents in an interaction scenario having the highest scenario value, and the feasible convex driving corridor is temporal and spatial constraints on the interaction intentions (S10321); and
using the semantic decision space and the feasible convex driving corridor as the optimal interaction scenario evolution feature (S10322).

5. The method for predicting a vehicle trajectory according to claim 4, wherein
the obtaining an optimal driving trajectory of the vehicle based on the optimal interaction scenario evolution feature and a state of the vehicle comprises:
performing, based on the optimal interaction scenario evolution feature, corresponding interaction intention encoding on each interaction intention comprised in the semantic decision space, and obtaining a reward function corresponding to the interaction intention (S1041);
obtaining a joint interaction reward function based on a plurality of interaction intentions and the reward function corresponding to each interaction intention; and
obtaining the optimal driving trajectory of the vehicle from the feasible convex driving corridor based on the joint interaction reward function and the state of the vehicle.

6. The method for predicting a vehicle trajectory according to claim 5, wherein
the performing, based on the optimal interaction scenario evolution feature, corresponding interaction intention encoding on each interaction intention comprised in the semantic decision space comprises:
performing spatio-temporal joint feature embedding based on the optimal interaction scenario evolution feature, to obtain a spatio-temporal joint feature embedding result, wherein the spatio-temporal joint feature embedding refers to feature embedding encoding, in the feasible convex driving corridor, of temporal features and spatial features of the traffic agents in the semantic decision space (S10411); and
performing corresponding interaction intention encoding on each interaction intention based on the spatio-temporal joint feature embedding result, to obtain an interaction encoding result (S10412).

7. The method for predicting a vehicle trajectory according to claim 5, wherein
the obtaining a reward function corresponding to the interaction intention comprises:
training, based on human driving behavior data, the reward function in the feasible convex driving corridor to minimize a difference between the ego vehicle driving decision corresponding to the reward function and the human driving behavior data, thereby obtaining the reward function corresponding to the interaction intention (S10413).

8. The method for predicting a vehicle trajectory according to claim 1, wherein
the obtaining, based on a static environment perception result and a traffic agent perception result of the vehicle at a current moment, a plurality of scenario interaction results of each traffic agent in an environment of the vehicle at the current moment comprises:
performing attention interaction encoding based on the static environment perception result and the traffic agent perception result to obtain an interaction encoding feature (S1011);
performing attention decoding on the interaction encoding feature to obtain an attention decoding result (S1012); and
obtaining the plurality of scenario interaction results based on the attention decoding result (S1013).

9. The method for predicting a vehicle trajectory according to claim 8,
wherein
the performing attention interaction encoding based on the static environment perception result and the traffic agent perception result to obtain an interaction encoding feature comprises:
performing attention interaction for the traffic agent perception results of different traffic agents to obtain a traffic agent interaction feature (S10111);
fusing the traffic agent interaction feature and a temporal feature to obtain a traffic agent fusion feature (S10112); and
performing attention interaction for the traffic agent fusion feature and the static environment perception result to obtain the interaction encoding feature (S10113).

10. A control apparatus, comprising at least one processor and at least one storage apparatus configured to store a plurality of program codes, wherein the program codes are adapted to be loaded and executed by the processor to perform the method for predicting a vehicle trajectory according to any one of claims 1 to 9.

11. A non-transitory computer-readable storage medium storing a plurality of program codes, wherein the program codes are adapted to be loaded and executed by a processor to perform the method for predicting a vehicle trajectory according to any one of claims 1 to 10.

12. A vehicle, comprising the control apparatus according to claim 10.

## Patentansprüche

1. Verfahren zum Vorhersagen einer optimalen Fahrtrajektorie eines Fahrzeugs, wobei das Verfahren Folgendes umfasst:
Erhalten, basierend auf einem statischen Umgebungswahrnehmungsergebnis und einem Verkehrsagentenwahrnehmungsergebnis des Fahrzeugs zu einem aktuellen Zeitpunkt, einer Mehrzahl von Szenariointeraktionsergebnissen jedes Verkehrsagenten in einer Umgebung des Fahrzeugs zu dem aktuellen Zeitpunkt, wobei die Szenariointeraktionsergebnisse unterschiedliche Interaktionsabsichten der Verkehrsagenten darstellen (S101);
Erhalten eines anfänglichen Interaktionsszenarios basierend auf Szenariointeraktionsergebnissen aller Verkehrsagenten, wobei das Interaktionsszenario eine Verteilung von Interaktionsabsichten unterschiedlicher Verkehrsagenten zu einem entsprechenden Zeitpunkt ist (S102);
Durchführen einer Interaktionsszenariosimulation basierend auf dem anfänglichen Interaktionsszenario und einer Fahrentscheidung eines Ego-Fahrzeugs, um ein optimales Interaktionsszenarioentwicklungsmerkmal zu erhalten (S103); und
Erhalten einer optimalen Fahrtrajektorie des Fahrzeugs basierend auf dem optimalen Interaktionsszenarioentwicklungsmerkmal und einem Zustand des Fahrzeugs (S104),
**dadurch gekennzeichnet, dass**
das Durchführen einer Interaktionsszenariosimulation basierend auf dem anfänglichen Interaktionsszenario und
einer Fahrentscheidung eines Ego-Fahrzeugs, um ein optimales Interaktionsszenarioentwicklungsmerkmal zu erhalten, Folgendes umfasst:
Erhalten von Interaktionsszenarien zu einer Mehrzahl von aufeinanderfolgenden Zeitpunkten in der Zukunft basierend auf dem anfänglichen Interaktionsszenario und der Fahrentscheidung des Ego-Fahrzeugs (S1031); und
Erhalten des optimalen Interaktionsszenarioentwicklungsmerkmals basierend auf einer Mehrzahl der Interaktionsszenarien (S1032).

2. Verfahren zum Vorhersagen einer Fahrzeugtrajektorie nach Anspruch 1, wobei
das Erhalten von Interaktionsszenarien zu einer Mehrzahl von aufeinanderfolgenden Zeitpunkten in der Zukunft basierend auf dem anfänglichen Interaktionsszenario und der Fahrentscheidung des Ego-Fahrzeugs (S1031) Folgendes umfasst:
Erhalten, für jeden Zeitpunkt, einer Mehrzahl von Interaktionsszenarien zu dem aktuellen Zeitpunkt basierend auf Interaktionsszenarien zu dem vorhergehenden Zeitpunkt und der Fahrentscheidung des Ego-Fahrzeugs (S10311); und
Erhalten, basierend auf Szenariowerten der Interaktionsszenarien, eines Interaktionsszenarios mit dem höchsten Szenariowert zu dem aktuellen Zeitpunkt als ein endgültiges Interaktionsszenario zu dem aktuellen Zeitpunkt, dadurch Erhalten der Interaktionsszenarien zu der Mehrzahl von aufeinanderfolgenden Zeitpunkten in der Zukunft (S10312).

3. Verfahren zum Vorhersagen einer Fahrzeugtrajektorie nach Anspruch 2, wobei das Verfahren ferner Bestimmen der Szenariowerte der Interaktionsszenarien gemäß dem folgenden Schritt umfasst:
Erhalten der Werte der Interaktionsszenarien durch ein angelerntes Interaktionswertnetzwerk,
wobei das angelernte Interaktionswertnetzwerk durch Trainieren basierend auf gekennzeichneten Daten zu einem menschlichen Fahrverhalten erhalten wird, und wobei das angelernte Interaktionswertnetzwerk einem Interaktionsszenario einen höheren Szenariowert zuweist, das mit einem menschlichen Fahrverhalten übereinstimmt.

4. Verfahren zum Vorhersagen einer Fahrzeugtrajektorie nach Anspruch 3, wobei
das Erhalten des optimalen Interaktionsszenarioentwicklungsmerkmals basierend auf einer Mehrzahl der Interaktionsszenarien Folgendes umfasst:
Erhalten, basierend auf einer Mehrzahl der Interaktionsszenarien, eines semantischen Entscheidungsraums und eines realisierbaren konvexen Fahrkorridors jedes Interaktionsszenarios, wobei der semantische Entscheidungsraum Interaktionsabsichten von Verkehrsagenten in einem Interaktionsszenario umfasst, das den höchsten Szenariowert aufweist, und wobei der realisierbare konvexe Fahrkorridor zeitliche und räumliche Beschränkungen der Interaktionsabsichten ist (S10321); und
Verwenden des semantischen Entscheidungsraums und des realisierbaren konvexen Fahrkorridors als das optimale Interaktionsszenarioentwicklungsmerkmal (S10322).

5. Verfahren zum Vorhersagen einer Fahrzeugtrajektorie nach Anspruch 4, wobei
das Erhalten einer optimalen Fahrtrajektorie des Fahrzeugs basierend auf dem optimalen Interaktionsszenarioentwicklungsmerkmal und einem Zustand des Fahrzeugs Folgendes umfasst:
Durchführen, basierend auf dem optimalen Interaktionsszenarioentwicklungsmerkmal, einer entsprechenden Interaktionsabsichtscodierung an jeder Interaktionsabsicht, die in dem semantischen Entscheidungsraum enthalten ist, und Erhalten einer der Interaktionsabsicht entsprechenden Belohnungsfunktion (S1041);
Erhalten einer gemeinsamen Interaktionsbelohnungsfunktion basierend auf einer Mehrzahl von Interaktionsabsichten und der jeder Interaktionsabsicht entsprechenden Belohnungsfunktion; und
Erhalten der optimalen Fahrtrajektorie des Fahrzeugs aus dem realisierbaren konvexen Fahrkorridor basierend auf der gemeinsamen Interaktionsbelohnungsfunktion und dem Zustand des Fahrzeugs.

6. Verfahren zum Vorhersagen einer Fahrzeugtrajektorie nach Anspruch 5, wobei
das Durchführen, basierend auf dem optimalen Interaktionsszenarioentwicklungsmerkmal, einer entsprechenden Interaktionsabsichtscodierung an jeder Interaktionsabsicht, die in dem semantischen Entscheidungsraum enthalten ist, Folgendes umfasst:
Durchführen einer Einbettung von gemeinsamen räumlich-zeitlichen Merkmalen basierend auf dem optimalen Interaktionsszenarioentwicklungsmerkmal, um ein Ergebnis der Einbettung von gemeinsamen räumlich-zeitlichen Merkmalen zu erhalten, wobei sich die Einbettung von gemeinsamen räumlich-zeitlichen Merkmalen auf eine Merkmalseinbettungscodierung, in dem realisierbaren konvexen Fahrkorridor, von zeitlichen Merkmalen und räumlichen Merkmalen der Verkehrsagenten in dem semantischen Entscheidungsraum bezieht (S10411); und
Durchführen einer entsprechenden Interaktionsabsichtscodierung an jeder Interaktionsabsicht basierend auf dem Ergebnis der Einbettung von gemeinsamen räumlich-zeitlichen Merkmalen, um ein Interaktionscodierungsergebnis zu erhalten (S10412).

7. Verfahren zum Vorhersagen einer Fahrzeugtrajektorie nach Anspruch 5, wobei
das Erhalten einer der Interaktionsabsicht entsprechenden Belohnungsfunktion Folgendes umfasst:
Trainieren, basierend auf Daten zu einem menschlichen Fahrverhalten, der Belohnungsfunktion in dem realisierbaren konvexen Fahrkorridor, um eine Differenz zwischen der der Belohnungsfunktion entsprechenden Fahrentscheidung des Ego-Fahrzeugs und den Daten zu einem menschlichen Fahrverhalten zu minimieren, dadurch Erhalten der der Interaktionsabsicht entsprechenden Belohnungsfunktion (S10413).

8. Verfahren zum Vorhersagen einer Fahrzeugtrajektorie nach Anspruch l, wobei
das Erhalten, basierend auf einem statischen Umgebungswahrnehmungsergebnis und einem Verkehrsagentenwahrnehmungsergebnis des Fahrzeugs zu einem aktuellen Zeitpunkt, einer Mehrzahl von Szenariointeraktionsergebnissen jedes Verkehrsagenten in einer Umgebung des Fahrzeugs zu dem aktuellen Zeitpunkt Folgendes umfasst:
Durchführen einer Aufmerksamkeitsinteraktionscodierung basierend auf dem statischen Umgebungswahrnehmungsergebnis und dem Verkehrsagentenwahrnehmungsergebnis, um ein Interaktionscodierungsmerkmal zu erhalten (S1011);
Durchführen einer Aufmerksamkeitsdecodierung an dem Interaktionscodierungsmerkmal, um ein Aufmerksamkeitsdecodierungsergebnis zu erhalten (S1012); und
Erhalten der Mehrzahl von Szenariointeraktionsergebnissen basierend auf dem Aufmerksamkeitsdecodierungsergebnis (S1013).

9. Verfahren zum Vorhersagen einer Fahrzeugtrajektorie nach Anspruch 8, wobei
das Durchführen einer Aufmerksamkeitsinteraktionscodierung basierend auf dem statischen Umgebungswahrnehmungsergebnis und dem Verkehrsagentenwahrnehmungsergebnis, um ein Interaktionscodierungsmerkmal zu erhalten, Folgendes umfasst:
Durchführen einer Aufmerksamkeitsinteraktion für die Verkehrsagentenwahrnehmungsergebnisse unterschiedlicher Verkehrsagenten, um ein Verkehrsagenteninteraktionsmerkmal zu erhalten (S10111); Fusionieren des Verkehrsagenteninteraktionsmerkmals und eines zeitlichen Merkmals, um ein Verkehrsagentenfusionsmerkmal zu erhalten (S10112); und Durchführen einer Aufmerksamkeitsinteraktion für das Verkehrsagentenfusionsmerkmal und das statische Umgebungswahrnehmungsergebnis, um ein Interaktionscodierungsmerkmal zu erhalten (S10113).

10. Steuervorrichtung, die mindestens einen Prozessor und mindestens eine Speichervorrichtung umfasst, die dazu konfiguriert ist, eine Mehrzahl von Programmcodes zu speichern, wobei die Programmcodes dazu ausgelegt sind, durch den Prozessor geladen und ausgeführt zu werden, um das Verfahren zum Vorhersagen einer Fahrzeugtrajektorie nach einem der Ansprüche 1 bis 9 durchzuführen.

11. Nichtflüchtiges computerlesbares Speichermedium, das eine Mehrzahl von Programmcodes speichert, wobei die Programmcodes dazu ausgelegt sind, durch einen Prozessor geladen und ausgeführt zu werden, um das Verfahren zum Vorhersagen einer Fahrzeugtrajektorie nach einem der Ansprüche 1 bis 10 durchzuführen.

12. Fahrzeug, das die Steuervorrichtung nach Anspruch 10 umfasst.

## Revendications

1. Procédé de prédiction d'une trajectoire de conduite optimale d'un véhicule, le procédé comprenant :
l'obtention, sur la base d'un résultat de perception d'environnement statique et d'un résultat de perception d'agent de circulation du véhicule à un instant courant,
d'une pluralité de résultats d'interaction de scénarios de chaque agent de circulation dans un environnement du véhicule à l'instant courant, les résultats d'interaction de scénarios représentant différentes intentions d'interaction des agents de circulation (S101) ;
l'obtention d'un scénario d'interaction initial sur la base des résultats d'interaction de scénarios de tous les agents de circulation, le scénario d'interaction étant une distribution d'intentions d'interaction de différents agents de circulation à un instant correspondant (S102) ;
la réalisation d'une simulation de scénario d'interaction sur la base du scénario d'interaction initial et d'une décision de conduite de véhicule égo afin d'obtenir une caractéristique optimale d'évolution de scénario d'interaction (S103) ; et
l'obtention d'une trajectoire de conduite optimale du véhicule sur la base de la caractéristique optimale d'évolution de scénario d'interaction et d'un état du véhicule (S104),
**caractérisé en ce que**
la réalisation d'une simulation de scénario d'interaction sur la base du scénario d'interaction initial et d'une décision de conduite de véhicule égo afin d'obtenir une caractéristique optimale d'évolution de scénario d'interaction comprend :
l'obtention de scénarios d'interaction à une pluralité d'instants consécutifs dans le futur sur la base du scénario d'interaction initial et de la décision de conduite de véhicule égo (S1031) ; et
l'obtention de la caractéristique optimale d'évolution de scénario d'interaction sur la base d'une pluralité des scénarios d'interaction (S1032).

2. Procédé de prédiction d'une trajectoire de véhicule selon la revendication 1, dans lequel
l'obtention de scénarios d'interaction à une pluralité d'instants consécutifs dans le futur sur la base du scénario d'interaction initial et de la décision de conduite de véhicule égo (S1031) comprend :
l'obtention, pour chaque instant, d'une pluralité de scénarios d'interaction à l'instant courant sur la base de scénarios d'interaction à l'instant précédent et de la décision de conduite de véhicule égo (S10311) ; et
l'obtention, sur la base de valeurs de scénario des scénarios d'interaction, d'un scénario d'interaction dont la valeur de scénario est la plus élevée à l'instant courant en tant que scénario d'interaction final à l'instant courant, pour ainsi obtenir les scénarios d'interaction à la pluralité d'instants consécutifs dans le futur (S10312).

3. Procédé de prédiction d'une trajectoire de véhicule selon la revendication 2, le procédé comprenant en outre la détermination des valeurs de scénario des scénarios d'interaction selon l'étape suivante :
l'obtention des valeurs des scénarios d'interaction au moyen d'un réseau de valeurs d'interaction appris,
le réseau de valeurs d'interaction appris étant obtenu par un entraînement sur la base de données de comportement humain de conduite annotées, et le réseau de valeurs d'interaction appris attribuant une valeur de scénario plus élevée à un scénario d'interaction conforme à un comportement humain de conduite.

4. Procédé de prédiction d'une trajectoire de véhicule selon la revendication 3, dans lequel
l'obtention de la caractéristique optimale d'évolution de scénario d'interaction sur la base d'une pluralité des scénarios d'interaction comprend :
l'obtention, sur la base d'une pluralité des scénarios d'interaction, d'un espace de décision sémantique et d'un couloir de conduite convexe faisable pour chaque scénario d'interaction, l'espace de décision sémantique comprenant les intentions d'interaction d'agents de circulation dans un scénario d'interaction dont la valeur de scénario est la plus élevée, et le couloir de conduite convexe faisable constituant des contraintes temporelles et spatiales sur les intentions d'interaction (S10321) ; et
l'utilisation de l'espace de décision sémantique et du couloir de conduite convexe faisable en tant que caractéristique optimale d'évolution de scénario d'interaction (S10322).

5. Procédé de prédiction d'une trajectoire de véhicule selon la revendication 4, dans lequel
l'obtention d'une trajectoire de conduite optimale du véhicule sur la base de la caractéristique optimale d'évolution de scénario d'interaction et d'un état du véhicule comprend :
la réalisation, sur la base de la caractéristique optimale d'évolution de scénario d'interaction, d'un codage d'intention d'interaction correspondant sur chaque intention d'interaction comprise dans l'espace de décision sémantique, et l'obtention d'une fonction de récompense correspondant à l'intention d'interaction (S1041) ;
l'obtention d'une fonction de récompense d'interaction conjointe sur la base d'une pluralité d'intentions d'interaction et de la fonction de récompense correspondant à chaque intention d'interaction ; et
l'obtention de la trajectoire de conduite optimale du véhicule à partir du couloir de conduite convexe faisable sur la base de la fonction de récompense d'interaction conjointe et de l'état du véhicule.

6. Procédé de prédiction d'une trajectoire de véhicule selon la revendication 5, dans lequel
la réalisation, sur la base de la caractéristique optimale d'évolution de scénario d'interaction, d'un codage d'intention d'interaction correspondant sur chaque intention d'interaction comprise dans l'espace de décision sémantique comprend :
la réalisation d'un plongement conjoint spatio-temporel de caractéristiques sur la base de la caractéristique optimale d'évolution de scénario d'interaction, afin d'obtenir un résultat de plongement conjoint spatio-temporel de caractéristiques, le plongement conjoint spatio-temporel de caractéristiques faisant référence à un codage de plongement de caractéristiques, dans le couloir de conduite convexe faisable, de caractéristiques temporelles et de caractéristiques spatiales des agents de circulation dans l'espace de décision sémantique (S10411) ; et
la réalisation d'un codage d'intention d'interaction correspondant sur chaque intention d'interaction sur la base du résultat de plongement conjoint spatio-temporel de caractéristiques, afin d'obtenir un résultat de codage d'interaction (S10412).

7. Procédé de prédiction d'une trajectoire de véhicule selon la revendication 5, dans lequel :
l'obtention d'une fonction de récompense correspondant à l'intention d'interaction comprend :
l'entraînement, sur la base de données de comportement humain de conduite, de la fonction de récompense dans le couloir de conduite convexe faisable afin de minimiser la différence entre la décision de conduite de véhicule égo correspondant à la fonction de récompense et les données de comportement humain de conduite, pour ainsi obtenir la fonction de récompense correspondant à l'intention d'interaction (S10413).

8. Procédé de prédiction d'une trajectoire de véhicule selon la revendication 1, dans lequel
l'obtention, sur la base d'un résultat de perception d'environnement statique et d'un résultat de perception d'agent de circulation du véhicule à un instant courant, d'une pluralité de résultats d'interaction de scénarios de chaque agent de circulation dans un environnement du véhicule à l'instant courant comprend :
la réalisation d'un codage d'interaction d'attention sur la base du résultat de perception d'environnement statique et du résultat de perception d'agent de circulation afin d'obtenir une caractéristique de codage d'interaction (S1011) ;
la réalisation d'un décodage d'attention sur la caractéristique de codage d'interaction afin d'obtenir un résultat de décodage d'attention (S1012) ; et
l'obtention de la pluralité de résultats d'interaction de scénarios sur la base du résultat de décodage d'attention (S1013).

9. Procédé de prédiction d'une trajectoire de véhicule selon la revendication 8, dans lequel
la réalisation d'un codage d'interaction d'attention sur la base du résultat de perception d'environnement statique et du résultat de perception d'agent de circulation afin d'obtenir une caractéristique de codage d'interaction comprend :
la réalisation d'une interaction d'attention pour les résultats de perception d'agent de circulation de différents agents de circulation afin d'obtenir une caractéristique d'interaction d'agents de circulation (S10111) ;
la fusion de la caractéristique d'interaction d'agents de circulation et d'une caractéristique temporelle afin d'obtenir une caractéristique fusionnée d'agents de circulation (S10112) ; et
la réalisation d'une interaction d'attention pour la caractéristique fusionnée d'agents de circulation et le résultat de perception d'environnement statique afin d'obtenir la caractéristique de codage d'interaction (S10113) .

10. Appareil de commande, comprenant au moins un processeur et au moins un appareil de stockage configuré pour stocker une pluralité de codes de programme, les codes de programme étant adaptés à être chargés et exécutés par le processeur afin de réaliser le procédé de prédiction d'une trajectoire de véhicule selon l'une quelconque des revendications 1 à 9.

11. Support de stockage non transitoire lisible par ordinateur stockant une pluralité de codes de programme, les codes de programme étant adaptés à être chargés et exécutés par un processeur afin de réaliser le procédé de prédiction d'une trajectoire de véhicule selon l'une quelconque des revendications 1 à 10.

12. Véhicule, comprenant l'appareil de commande selon la revendication 10.
